# EUROPEAN PATENT SPECIFICATION

(11) **EP 1 771 903 B1**
(45) Date of publication and mention of the grant of the patent: **07.03.2018**
(21) Application number: 05746137.8
(22) Date of filing: 25.05.2005
(51) Int. Cl.: H01M 4/92, C22C 5/04, H01M 4/86, H01M 8/1018, H01M 8/1004, H01M 8/1011

(54) **RUTHENIUM-RHODIUM ALLOY ELECTRODE CATALYST AND FUEL CELL COMPRISING THE SAME**
RUTHENIUM-RHODIUM-LEGIERUNGSELEKTRODENKATALYSATOR UND BRENSTOFFZELLE DAMIT
CATALYSEUR D'ELECTRODE, A BASE D'UN ALLIAGE RUTHENIUM-RHODIUM, ET PILE A COMBUSTIBLE LE COMPRENANT

(30) Priority: 25.05.2004 KR 2004037433
(43) Date of publication of application: 11.04.2007
(73) Proprietor: LG Chem, Ltd., Seoul 150-721 (KR)
(72) Inventor: PARK, Jin-Nam, Seo-gu, Daejeon 302-280 (KR); LEE, Won-Ho, Daejeon 302-741 (KR); KIM, Hyuk, Daejeon 305-340 (KR); KIM, Min-Suk, Daejeon 302-280 (KR); SUNG, Yung-Eun, Yuseong-gu Daejeon 305-380 (KR); CHOI, Jong-Ho, Buk-gu, Gwangju 500-712 (KR); PARK, In-Su, Yuseong-gu Daejeon 305-380 (KR); NAM, Woo-Hyun, Yuseong-gu Daejeon 305-380 (KR)
(74) Representative: Hoffmann Eitle
(86) International application number: PCT/KR2005/001537
(87) International publication number: WO 2005/117171

(56) References cited:
- EP-A- 1 258 937
- EP-A- 1 336 997
- KR-A- 2003 069 283
- US-A1- 2002 146 614
- US-B1- 6 284 402
- US-B1- 6 432 570
- US-B2- 6 682 837

## Description

### Technical Field

The present invention relates to an electrode catalyst for fuel cells, which comprises a ruthenium-rhodium alloy and improves catalytic availability and safety by virtue of its excellent oxygen reduction activity and methanol resistance. The present invention also relates to a membrane electrode assembly (MEA) comprising the same catalyst and a high-quality and high-efficiency fuel cell, preferably a direct liquid fuel cell, comprising the same membrane electrode assembly.

### Background Art

Recently, as portable electronic instruments and wireless communication instruments are widely distributed, development and research into fuel cells as portable power sources, fuel cells for pollution-free cars and power generating fuel cells as clean energy sources are made intensively.

Fuel cells are power generation systems that convert chemical energies provided by fuel gases (hydrogen, methanol or other organic substances) and oxidants (oxygen or air) directly into electric energies through electrochemical reactions. Fuel cells are classified depending on their operating conditions into solid oxide electrolyte fuel cells, molten carbonate electrolyte fuel cells, phosphate electrolyte fuel cells and polymer electrolyte membrane fuel cells.

More particularly, the polymer electrolyte membrane fuel cells are classified into proton exchange membrane fuel cells (PEMFC) using hydrogen gas as fuel, direct methanol fuel cell (DMFC) using liquid methanol as fuel, or the like. Among those, direct methanol fuel cells are pollution-free energy sources capable of operating at a low temperature of 100 °C or lower. Additionally, DMFCs have high energy density compared to other batteries and internal combustion engines as technical competitors. Further, DMFCs are energy conversion systems that show no difficulty in a charging process and can be used for 50,000 hours or more in the presence of fuels supplied thereto.

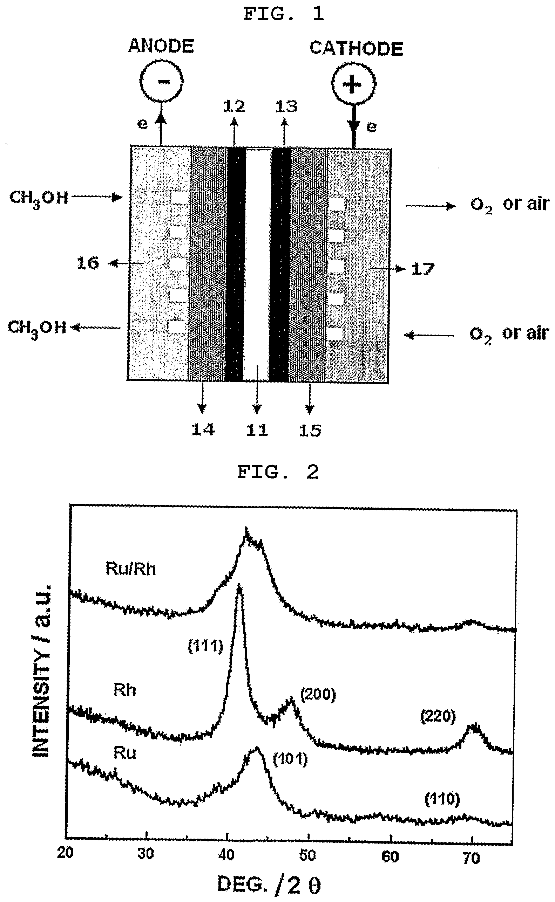

Referring to FIG. 1 showing a schematic view of a fuel cell, the fuel cell includes an anode (negative electrode), cathode (positive electrode) and a proton exchange membrane (11) interposed between both electrodes. The proton exchange membrane is formed of a polymer electrolyte and has a thickness of between 30 *µ*m and 300 *µ*m. Each of the anode and cathode includes a gas diffusion electrode comprising a support layer (14), (15) for supplying reactants and a catalyst layer (12), (13) where the reactants are subjected to redox reactions (such cathode and anode are commonly referred to as gas diffusion electrodes), and a collector (16), (17).

In a direct methanol fuel cell, oxidation occurs at an anode, and then protons and electrons produced by the oxidation are transferred to a cathode. The protons transferred to the cathode are bonded to oxygen to form water and the electromotive force generated by such reduction of oxygen becomes an energy source for the fuel cell. Such reactions occurred at an anode and a cathode can be represented by the following reaction formulae.
Anode: CH₃OH + H₂O → CO₂ + 6H⁺ + 6e⁻ Eₐ = 0.05V
Cathode: 3/2O₂ + 6H⁺ + 6e⁻ → 3H₂O E_{c}= 1.23V
Total: CH₃OH + 3/2O₂ → CO₂ + 2H₂O E_{cell}= 1.18V

In the above reaction formulae, reduction of oxygen at a cathode and oxidation of methanol at an anode significantly affect the quality of a fuel cell. In practice, platinum having excellent oxygen reduction activity has been widely used as cathode catalyst in order to improve the quality of a fuel cell. Additionally, although many attempts are made to develop cathode materials using platinum alloys such as platinum-nickel, -chrome or -iron alloys due to the high cost of platinum (Takako Toda, Hiroshi Igarashi, Hiroyuki Uchida, and Mashahiro Watanabe, J. Electrochem. Soc., 146, p3750, 1999), any satisfactory results cannot be obtained.

Meanwhile, methanol used as material for anodic oxidation in a fuel cell may cause a methanol crossover phenomenon wherein methanol crosses over to a cathode from an anode through a polymer electrolyte, thereby functioning as catalytic poison for the cathode material, resulting in significant degradation in catalytic availability and overall quality of the fuel cell. Because of the above-mentioned reasons, there is an additional problem in that concentration of methanol as material for anodic oxidation is limited.

EP-A-1 258 937 discloses a catalyst material for a fuel cell electrode comprising platinum and often platinum black, either supported or not on high specific surface particles of a chemically inert and electrically conductive material such as for example carbon black or other noble metals such as iridium, palladium, rhodium, ruthenium and alloys thereof.

EP-A-1 336 997 discloses a metal catalyst for a fuel cell. The catalyst comprises each of platinum, ruthenium and two or more of rhodium, nickel and osmium. Such a catalyst is indicated to have high activity to methanol oxidation and strong resistance to poisoning by carbon monoxide which is a by-product of methanol oxidation.

US6284402 B1 discloses a cathode catalyst for a fuel cell including an alloy having rhodium in an atomic percent greater than about 11 and less than about 88, and one or more metals selected from ruthenium, platinum, osmium, and iridium. The catalysts can be supported on a carbon support.

### Brief Description of the Drawings

The foregoing and other objects, features and advantages of the present invention will become more apparent from the following detailed description when taken in conjunction with the accompanying drawings in which:
FIG. 1 is a schematic view showing a fuel cell;
FIG. 2 is an X-ray diffraction graph of the catalyst comprising ruthenium-rhodium alloy obtained from Example 1;
FIG. 3 is a cyclic voltammogram (CV) showing the oxygen reduction activity of the catalyst comprising ruthenium-rhodium alloy obtained from Example 1, and the oxygen reduction activity of each of platinum, ruthenium and rhodium as controls;
FIG. 4 is a cyclic voltammogram (CV) showing the oxygen reduction activity of the catalyst comprising ruthenium-rhodium alloy obtained from Example 1 in the presence of methanol;
FIG. 5 is a graph showing the quality of the direct methanol fuel cell using the catalyst comprising ruthenium-rhodium alloy obtained from Example 1 as cathode catalyst;
FIG. 6 is a cyclic voltammogram (CV) showing the oxygen reduction activity of the catalyst comprising ruthenium-rhodium alloy obtained from Example 1 and the oxygen reduction activity of the pure platinum catalyst, in the presence of methanol; and
FIG. 7 is a graph showing the quality of the direct methanol fuel cells using the catalyst comprising ruthenium-rhodium alloy obtained from Example 1 and a currently used platinum catalyst as cathode catalysts.

### Disclosure of the Invention

As described above, we have recognized that although a platinum or platinum alloy catalyst has excellent oxygen reduction activity, the catalyst is problematic in that it is cost-inefficient and causes degradation in the quality of a fuel cell due to its activity toward methanol oxidation. In this regard, we have found that when a non-platinum based catalyst comprising a ruthenium-rhodium alloy is used instead of a platinum or platinum alloy catalyst, it is possible to solve the problems of poisoning of a cathode catalyst caused by a methanol crossover phenomenon and limitation in the concentration of a material for oxidation, as well as to provide a high quality and high efficiency fuel cell by virtue of excellent oxygen reduction activity.

Therefore, it is an object of the present invention to provide a high-quality and high-efficiency catalyst comprising a ruthenium-rhodium alloy, which shows excellent methanol resistance and oxygen reduction activity at the same time, and a method for preparing the same catalyst.

It is another object of the present invention to provide a membrane electrode assembly (MEA) using the above catalyst comprising a ruthenium-rhodium alloy and a fuel cell comprising the same membrane electrode assembly.

According to an aspect of the present invention, there is provided a non-platinum based electrode catalyst for fuel cells which comprises a ruthenium (Ru)-rhodium (Rh) binary alloy, wherein ruthenium and rhodium are each present in the ruthenium-rhodium binary alloy in an amount of 10-90 mol%, a membrane electrode assembly (MEA) comprising the same catalyst, and a fuel cell, preferably a direct liquid fuel cell (DLFC), comprising the same membrane electrode assembly.

According to another aspect of the present invention, there is provided a method for preparing the non-platinum based electrode catalyst for fuel cells comprising a ruthenium-rhodium catalyst, the method including the steps of: (i) dissolving a ruthenium salt and rhodium salt separately to provide a ruthenium salt solution and rhodium salt solution; (ii) mixing the solutions obtained from step (i) with stirring to provide a mixed solution and adding a reducing agent thereto to obtain precipitate of reduced salts; and (iii) drying the precipitate obtained from step (ii).

Hereinafter, the present invention will be explained in more detail.

The present invention is characterized by the use of a non-platinum based electrode catalyst having excellent oxygen reduction activity as well as excellent methanol resistance (i.e., a ruthenium-rhodium alloy catalyst) as electrode catalyst for fuel cells.

In a fuel cell, for example a direct liquid fuel cell such as a direct methanol fuel cell, a methanol crossover phenomenon should be considered carefully, because it greatly affects qualities of the catalyst, cathode and the whole fuel cell.
(1) In general, platinum catalysts or platinum based alloy catalyst with excellent oxygen reduction activity have been widely used as electrode catalysts for fuel cells. However, there is a problem in that the shortcoming specific to platinum itself (i.e., activity toward to methanol) may cause a methanol crossover phenomenon to a cathode, resulting in significant loss of oxygen reduction activity provided by platinum. Such problematic phenomena occur in catalysts comprising platinum-containing alloys as well as in a pure platinum catalyst.
   On the contrary, because the catalyst comprising a ruthenium-rhodium alloy according to the present invention is a non-platinum based catalyst showing excellent oxygen reduction activity and excellent methanol resistance at the same time, it is possible to prevent a cathode catalyst from being poisoned by a methanol crossover phenomenon, and thus to maintain excellent oxygen reduction activity of the ruthenium-rhodium alloy catalyst even in the presence of methanol.
(2) Additionally, conventional electrode catalysts have a problem in that concentration of methanol as material for anodic oxidation is limited due to the above-mentioned methanol crossover phenomenon. However, because the catalyst comprising a ruthenium-rhodium alloy according to the present invention has excellent methanol resistance, it is possible to use methanol with high concentration and thus to provide a fuel cell with high quality and high efficiency.
(3) Further, conventional catalysts for fuel cells have a problem in that it is difficult to save production cost because of expensive platinum. However, the catalyst comprising a ruthenium-rhodium alloy according to the present invention uses inexpensive raw materials compared to platinum, and thus is cost-efficient in that it is possible to increase the quality and efficiency of a fuel cell while saving the cost.

As described above, the alloy consisting of ruthenium and rhodium can be used as electrode catalyst, preferably as cathode catalyst, for fuel cells.

As used herein, fuel cells include direct liquid fuel cells and polymer electrolyte membrane fuel cells utilizing an oxygen reduction reaction as cathodic reaction, but are not limited thereto. Preferably, direct methanol fuel cells, direct formic acid fuel cells, direct ethanol fuel cells or direct dimethylether fuel cells are used.

In the ruthenium-rhodium alloy according to the present invention, ruthenium is present in an amount of between 10 and 90 mol%, preferably of between 50 and 75 mol%.

The electrode catalyst may be present as catalyst supported by a conventional carrier known to one skilled in the art.

The carrier is used in order to disperse noble metal catalysts widely on its broad surface area and to improve physical properties including thermal and mechanical stabilities that cannot be obtained by the metal catalysts alone. To provide a supported catalyst, it possible to use a method of coating catalyst particles on a support generally known to one skilled in the art or other methods.

The carrier that may be used includes porous carbon, conductive polymers or metal oxides. In the case of a supported catalyst, the carrier is used in an amount of between 1 and 95 wt%, preferably of between 2 and 90 wt% based on the total weight of the catalyst.

The porous carbon that may be used includes active carbon, carbon fiber, graphite fiber, carbon nanotube, etc. The conductive polymers that may be used include polyvinyl carbazole, polyaniline, polypyrrole or derivatives thereof. Additionally, the metal oxides that may be used include at least one metal oxide selected from the group consisting of oxides of tungsten, titanium, nickel, ruthenium, tantalum and cobalt.

The catalyst comprising a ruthenium-rhodium according to the present invention may be prepared by a method currently used in the art. One embodiment of the method comprises the steps of: (i) dissolving a ruthenium salt and rhodium salt separately to provide a ruthenium salt solution and rhodium salt solution; (ii) mixing the solutions obtained from step (i) with stirring to provide a mixed solution and adding a reducing agent thereto to obtain precipitate of reduced salts; and (iii) drying the precipitate obtained from step (ii).
(1) First, metal salts containing ruthenium and rhodium separately are taken in such an adequate amount as to satisfy a desired molar composition and dissolved in a solvent with stirring to provide a ruthenium-containing solution and rhodium-containing solution.
   There are no particular limitations in the ruthenium salt and rhodium salt. It is possible to use hydrated salts of ruthenium and rhodium, for example chlorides, nitrides, sulfates, etc., containing ruthenium and rhodium. Particularly, ruthenium chloride (RuCl₃ · xH₂O) and rhodium chlorides (RhCl₃ · xH₂O) are preferred. Additionally, although metal salts available from Aldrich Chemical, Co., are used in the present invention, metal salts available from other commercial sources may be used, as long as they have the same composition as the above metal salts.
   As described above, each of the ruthenium salt and rhodium salt is used in an amount corresponding to a mole fraction of between 10 and 90 mol%. The solvent that may be used in the present invention includes all kinds of solvents capable of dissolving the above-described metal salts, distilled water being preferred as solvent.
(2) The ruthenium-containing solution and rhodium-containing solution obtained in the preceding step are mixed with stirring, and then a reducing agent is added to the mixed solution all at once to obtain reduced products of the metal salts (for example, ruthenium salt and rhodium salt) as precipitate.
   Particular examples of the reducing agent that may be used include sodium borohydride (NaBH₄), hydrazine (N₂H₄), sodium thiosulfite, nitrohydarzine and sodium formate (HCOONa), but are not limited thereto.
   Preferably, the mixed solution containing ruthenium and rhodium dissolved therein is adjusted to pH of between 7 and 8, more preferably to pH 8, so as to improve the reduction capability of the metal salts. However, a step of adjusting pH of the mixed solution is not essential to the present invention. Therefore, the pH-adjusting step may be omitted.
(3) The precipitate obtained from the preceding step is washed with distilled water, followed by drying, to obtain a ruthenium-rhodium alloy catalyst as final product.

In this step, the precipitate may be dried in a manner currently used in the art. For example, the precipitate may be freeze-dried at a temperature of between -40°C and 0°C for 1-48 hours.

In a variant, a supported catalyst, i.e., catalyst comprising a ruthenium-rhodium alloy supported by a carrier can be obtained by adding the carrier to the mixed solution of metal salts. Such supported catalysts using porous carbon, conductive polymers, porous metal oxides, etc., as carriers have an advantage in that they can provide the same catalytic activity with a decreased amount of catalyst compared to the corresponding non-supported catalyst.

In one embodiment of the method for preparing a catalyst comprising a ruthenium-rhodium alloy supported by a carrier, a reducing agent is added to the aqueous solution containing metal ions to form a metal alloy solution. Next, aqueous solution of a carbon support is added to the metal alloy solution, thereby forming the metal alloy coated on the carbon support, and the resultant solution is stirred to form slurry. Then, the slurry is left at a temperature of 75-80°C for 1-3 days to obtain dry powder and the powder is washed with distilled water.

According to another aspect of the present invention, there is provided an electrode, preferably a cathode, for fuel cells.

An electrode for fuel cells comprises a gas diffusion layer and catalyst layer. It may comprise a catalyst layer alone. Otherwise, it may have a catalyst layer integrally formed on a gas diffusion layer.

Generally, the gas diffusion layer may be obtained by impregnating carbon paper or carbon fiber fabric having conductivity and porosity of 80% or more with a hydrophobic polymer (for example, polytetrafluoro ethylene or fluoroethylene copolymer) and baking the resultant product at an approximate temperature between 340 °C and 370°C. In order to prevent the gas diffusion layer of a cathode from being flooded by water generated from the catalyst layer of the cathode, the gas diffusion layer should be hydrophobic. To satisfy this, the hydrophobic polymer can be present in the gas diffusion layer in an amount of between about 10 and 30 wt%.

The catalyst used in the catalyst layer of a cathode comprise powder of the ruthenium-rhodium alloy catalyst according to the present invention, the alloy catalyst powder being supported uniformly on surfaces of conductive carbon. Particularly, finely divided carbon powder such as carbon black, carbon nanotube and carbon nanohorn can be used in order to increase the specific surface area of catalyst and thus to improve reaction efficiency. Additionally, the catalyst used in the catalyst layer of an anode generally comprises powder of platinum or platinum alloy such as Pt/Ru. If necessary, the ruthenium-rhodium alloy catalyst according to the present invention may be used for the catalyst layer of the anode.

The electrode for fuel cells according to the present invention can be manufactured by a conventional method known to one skilled in the art. In one embodiment of the method, catalyst ink is provided that contains the ruthenium-rhodium alloy catalyst, a proton conductive material such as Nafion and a mixed solvent enhancing dispersion of the catalyst. Then, the catalyst ink is applied on a gas diffusion layer by a printing, spraying, rolling or a brushing process and dried to form the catalyst layer of the finished electrode.

According to still another aspect of the present invention, there is provided a membrane electrode assembly (MEA) for fuel cells, which comprises: (a) a first electrode having a first catalyst layer; (b) a second electrode having a second catalyst layer; and (c) an electrolyte membrane interposed between the first electrode and the second electrode, wherein either or both of the first catalyst layer and the second catalyst layer comprise the ruthenium-rhodium alloy catalyst according to the present invention.

One of the first and the second electrodes is a cathode and the other is an anode.

The membrane electrode assembly is referred to as an assembly of an electrode for carrying out an electrochemical catalytic reaction between fuel and air with a polymer membrane for carrying out proton transfer. The membrane electrode assembly is a monolithic unit having a catalyst-containing electrode adhered to an electrolyte membrane.

In the membrane electrode assembly, each of the catalyst layers of the anode and cathode is in contact with the electrolyte membrane. The MEA can be manufactured by a conventional method known to one skilled in the art. For example, the electrolyte membrane is disposed between the anode and cathode to form an assembly. Next, the assembly is inserted into the gap between two hot plates operated in a hydraulic manner while maintaining a temperature of about 140 °C, and then pressurized to perform hot pressing.

There is no particular limitation in the electrolyte membrane, as long as it is a material having proton conductivity, mechanical strength sufficient to permit film formation and high electrochemical stability. Non-limiting examples of the electrolyte membrane include tetrafluoroethylene-co-fluorovinyl ether, wherein the fluorovinyl ether moiety serves to transfer protons.

According to yet another aspect of the present invention, there is provided a fuel cell comprising the above membrane electrode assembly.

The fuel cell may be manufactured by using the above membrane electrode assembly and a bipolar plate in a conventional manner known to one skilled in the art.

The fuel cell may be a polymer electrolyte fuel cell or direct liquid fuel cell whose cathodic reaction is oxygen reduction, but is not limited thereto. Particularly, a direct methanol fuel cell, direct formic acid fuel cell, direct ethanol fuel cell, direct dimethyl ether fuel cell, etc., are preferred.

### Best Mode for Carrying Out the Invention

Reference will now be made in detail to the preferred embodiments of the present invention. It is to be understood that the following examples are illustrative only and the present invention is not limited thereto.

### [Examples 1-3] Ruthenium-rhodium alloy catalyst and Manufacture of fuel cell using the same

### Example 1

### 1-1. Preparation of ruthenium-rhodium alloy catalyst (molar composition 2:1)

0.408 g (1.966 mmol) of a ruthenium salt (RuCl₃ · xH₂O available from Aldrich co.) and 0.206 g (0.983 mmol) of a rhodium salt (RhCl₃ · xH₂O available from Aldrich co.) were weighed and added to distilled water separately. Each metal salt solution was stirred at room temperature (25°C) for 3 hours. Then, the metal salt solutions were mixed and the resultant solution was stirred for 3 hours again. After the mixed metal salt solution was adjusted to pH 8, aqueous solution of 2 mole of sodium borohydride (NaBH₄) was added thereto as reducing agent in an excessive amount (three times of the stoichiometric amount) to obtain precipitate of reduced metal salts. Then, the precipitate was washed with distilled water three times, followed by freeze-drying for 12 hours, to obtain a ruthenium-rhodium alloy (2:1).

### 1-2. Manufacture of membrane electrode assembly

The ruthenium-rhodium alloy obtained from the above Example 1-1 and a conventional PtRu black catalyst (available from Johnson Matthey Com.) were used as cathode catalyst and anode catalyst, respectively, in an amount of 5 mg/cm². The cathode and anode catalysts were bonded with an electrolyte membrane, i.e., Nafion 117 (available from Johnson Matthey Co.) to form a membrane electrode assembly.

### 1-3. Manufacture of fuel cell

The unit cell used for the following test has a size of 2 cm². To the unit cell, 2M methanol solution was supplied to the anode at a rate of 0.2-2 cc/min. and oxygen was supplied to the cathode at a flow rate of 300-1000 cc/min. through a graphite channel.

### Example 2

Example 1 was repeated to provide a ruthenium-rhodium alloy catalyst (molar composition 1:1), MEA comprising the same catalyst and a fuel cell comprising the same MEA, except that 0.305 g (1.471 mmol) of the ruthenium salt and 0.308 g (1.471 mmol) of the rhodium salt were used.

### Example 3

Example 1 was repeated to provide a ruthenium-rhodium alloy catalyst (molar composition 3:1), MEA comprising the same catalyst and a fuel cell comprising the same MEA, except that 0.460 g (2.217 mmol) of the ruthenium salt and 0.155 g (0.739 mmol) of the rhodium salt were used.

### [Comparative Examples 1-2]

### Comparative Example 1

Example 1 was repeated to provide a platinum catalyst, MEA comprising the same catalyst and a fuel cell comprising the same MEA, except that 0.630 g (1.538 mmol) of a platinum salt (H₂PtCl₆ · xH₂O available from Aldrich Co.) was used alone.

### Comparative Example 2. Manufacture of fuel cell using conventional platinum catalyst

Example 1 was repeated to provide a fuel cell, except that a conventional platinum catalyst (available from Johnson Matthey Co.) was used as cathode catalyst.

### Experimental Example 1. Test for quality of ruthenium-rhodium alloy catalyst

### 1-1. X-ray diffraction analysis

The ruthenium-rhodium alloy catalyst according to the present invention was analyzed by X-ray diffraction as follows.

The ruthenium-rhodium alloy obtained from Example 1 was used as sample and pure ruthenium metal and rhodium metal were used as controls.

After analyzing by X-ray diffraction, the ruthenium-rhodium alloy did not show a peak corresponding to rhodium alone and showed a peak corresponding to ruthenium, wherein the ruthenium peak was slightly shifted toward a lower angle compared to the peak corresponding to ruthenium alone.

This indicates that the ruthenium-rhodium alloy according to the present invention comprises ruthenium suitably combined with rhodium (see, FIG. 2).

### 1-2. Evaluation for oxygen reduction activity

The following electrochemical analysis was performed to determine oxygen reduction activity of the ruthenium-rhodium alloy catalyst according to the present invention.

To perform the electrochemical analysis, a three-electrode cell, which permits evaluation for reaction activity of any one electrode of the cathode and anode, was used. In this example, only the cathode catalyst was tested for its activity.

A Pt wire, Ag/AgCl electrode and a carbon rod coated with a catalyst sample were used as counter electrode, reference electrode and working electrode, respectively, at room temperature. The ruthenium-rhodium alloy according to Example 1 was used as catalyst sample, and platinum metal, ruthenium metal and rhodium metal were used as controls. 0.5M sulfuric acid was used as liquid electrolyte. To determine oxygen reduction activity of a catalyst, the working electrode was introduced into the solution of 0.5M H₂SO₄ saturated with oxygen and a voltage of between 0.65V and 1.2V was applied thereto sequentially. Variations in electric current generated during the voltage application were measured. When performing the above procedure, the voltage was applied between the working electrode and reference electrode and electric current was measured between the working electrode and counter electrode.

Oxygen reduction activity results from the reduction current value of dissolved oxygen reduced by a catalyst. Therefore, when there is no drop in electric current in the presence of a catalyst, the catalyst has no reduction activity.

After the experiment, the ruthenium-rhodium alloy, ruthenium metal and rhodium metal used in this test showed a drop in electric current at a voltage of 1.0V or less in the three-electrode cell system. However, they showed lower activity compared to platinum metal due to the lack of platinum. Particularly, the ruthenium-rhodium alloy according to the present invention showed a significantly large negative value of electric current generated under the application of the same voltage, as compared to pure ruthenium metal or rhodium metal.

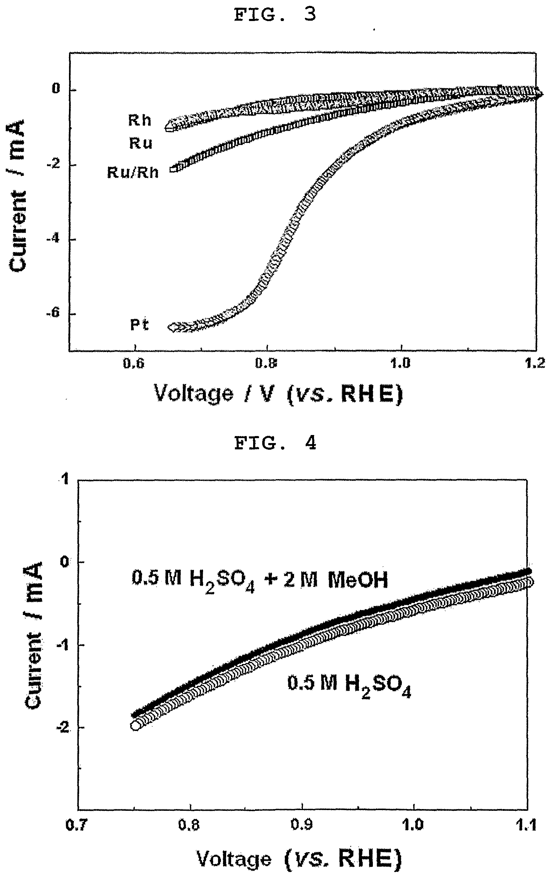

Therefore, it can be seen that the ruthenium-rhodium alloy catalyst according to the present invention has excellent oxygen reduction activity (see, FIG. 3).

### 1-3. Evaluation for methanol resistance

Experimental Example 1-2 was repeated to determine oxygen reduction activity of the ruthenium-rhodium alloy catalyst according to the present invention in the presence of methanol.

A mixed solution of 2M methanol/0.5M sulfuric acid was used as liquid electrolyte and 0.5M sulfuric acid saturated with oxygen was used as control. Similarly to Experimental Example 1-2, the working electrode was coated with the ruthenium-rhodium alloy catalyst according to Example 1. A voltage of between 0.75V and 1.1V was applied sequentially and variations in electric current were measured.

After the experiment, the ruthenium-rhodium alloy catalyst according to the present invention showed little degradation in oxygen reduction activity even in the presence of 2M methanol (see, FIG. 4). Therefore, it can be seen that the non-platinum based ruthenium-rhodium alloy catalyst has excellent methanol resistance.

### Experimental Example 2. Analysis for quality of fuel cell using ruthenium-rhodium alloy catalyst

### 2-1. Analysis for fuel cell quality

The following test was performed to determine quality of the unit cell obtained by using the ruthenium-rhodium alloy catalyst according to Example 1.

2M methanol solution was supplied to the anode of the unit cell obtained from Example 1 through a graphite channel at a rate of 0.2-2 cc/min. Additionally, oxygen was supplied to the cathode at a flow rate of 300-1000 cc/min., and then the unit cell was measured for current density and power density.

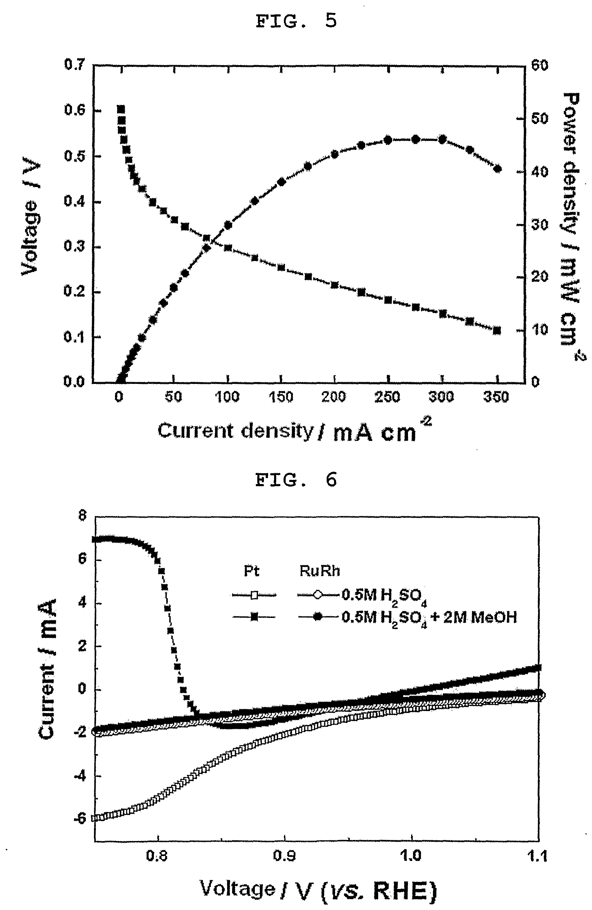

After the test, the ruthenium-rhodium alloy catalyst according to the present invention showed a current density of 98 mA/cm² and a power density of 30 mW/cm² at a voltage of 0.3V. This indicates that the ruthenium-rhodium alloy catalyst according to the present invention has excellent oxygen reduction activity (see, FIG. 5).

### 2-2. Electrochemical analysis

The fuel cell using the ruthenium-rhodium alloy according to the present invention was analyzed electrochemically as follows.

The ruthenium-rhodium alloy catalyst according to Example 1 was used as sample and pure platinum metal catalyst according to Comparative Example 1 was used as control. A mixed solution of 2M methanol/0.5M sulfuric acid and 0.5M sulfuric acid were used as liquid electrolytes. A voltage of between 0.75V and 1.1V was applied sequentially and variations in electric current of the unit cell were measured.

After the test, although the ruthenium-rhodium alloy catalyst according to the present invention showed slightly lower oxygen reduction activity compared to the pure platinum catalyst used as control, it showed no drop in oxygen reduction activity even in the presence of 2M methanol. On the contrary, the pure platinum catalyst showed complete loss of oxygen reduction current in the presence of 2M methanol due to the oxidation current density of methanol (see, FIG. 6).

Therefore, it can be seen that the cathode catalyst comprising the ruthenium-rhodium alloy according to the present invention has excellent methanol resistance as well as good oxygen reduction activity, and thus is useful as cathode catalyst for fuel cells (for example, direct methanol fuel cells).

### 2-3. Test for fuel cell quality

The following test was performed to compare the quality of the fuel cell using the ruthenium-rhodium alloy catalyst according to Example 1 with that of the fuel cell using a conventional platinum catalyst.

The fuel cell using the ruthenium-rhodium alloy as cathode catalyst according to Example 1 was used as sample and the fuel cell using a conventional platinum catalyst (available from Johnson Matthey Co.) according to Comparative Example 2 was used as control. 2M and 10M methanol solutions were supplied to the anode of each fuel cell (size: 2 cm²) through a graphite channel at a rate of 0.2-2 cc/min. Additionally, oxygen was supplied to the cathode of each fuel cell at a flow rate of 300-1000 cc/min.

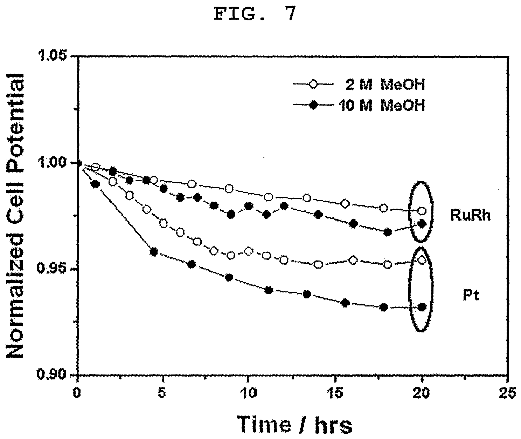

After the test, the fuel cell using the conventional platinum catalyst according to Comparative Example 2 showed a continuous drop in electric potential with the lapse of time, when 2M methanol solution is supplied to the anode, and a drop in electric potential of about 0.07V, when 10M methanol solution is supplied to the anode (see, FIG. 7). This indicates that oxygen reduction cannot be made satisfactorily due to a methanol crossover phenomenon from the anode to the cathode and poisoning of platinum as cathode catalyst.

On the contrary, the fuel cell using the ruthenium-rhodium alloy catalyst as cathode catalyst showed stable electric potentials when 2M and 10M methanol solutions were supplied to the anode (see, FIG. 7). Therefore, it can be seen that the ruthenium-rhodium alloy catalyst according to the present invention overcomes the limitation in concentration of methanol used as material for anodic oxidation, and thus permits methanol with high concentration to be used as material for anodic oxidation.

### Industrial Applicability

As can be seen from the foregoing, the ruthenium-rhodium alloy catalyst according to the present invention has not only good oxygen reduction activity but also excellent methanol resistance compared to conventional platinum and platinum-based alloy catalysts. Therefore, the ruthenium-rhodium alloy catalyst according to the present invention can prevent poisoning of a cathode catalyst caused by a methanol crossover phenomenon and overcome the limitation in concentration of a material for anodic oxidation, and thus can be used as high-quality and high-efficiency electrode catalyst having improved catalytic availability and stability.

## Claims

1. A non-platinum based electrode catalyst for fuel cells which comprises a ruthenium (Ru)-rhodium (Rh) binary alloy, wherein ruthenium and rhodium are each present in the ruthenium-rhodium binary alloy in an amount of 10-90 mol %.

2. A non-platinum based electrode catalyst according to Claim 1, which is supported by at least one carrier selected from porous carbon, conductive polymers and metal oxides.

3. A non-platinum based electrode catalyst according to Claim 1, which is a cathode catalyst.

4. A non-platinum based electrode comprising the catalyst as defined in any preceding claim.

5. A membrane electrode assembly (MEA) for a fuel cell which comprises:
(a) a first electrode having a first catalyst layer;
(b) a second electrode having a second catalyst layer; and
(c) an electrolyte membrane interposed between the first electrode and the second electrode;
wherein either or both of the first catalyst layer and the second catalyst layer comprise the non-platinum based catalyst as defined in any of Claims 1-3.

6. A fuel cell comprising the membrane electrode assembly as defined in Claim 5.

7. A fuel cell according to Claim 6, which is a polymer electrolyte fuel cell, a direct liquid fuel cell, a direct methanol fuel cell, a direct formic acid fuel cell, a direct ethanol fuel cell or a direct dimethylether fuel cell.

8. A method for preparing the non-platinum based electrode catalyst as defined in Claim 1, which comprises the steps of:
(i) dissolving a ruthenium salt and a rhodium salt separately to provide a ruthenium salt solution and a rhodium salt solution;
(ii) mixing the solutions obtained in step (i) with stirring to provide a mixed solution and adding a reducing agent thereto to obtain a precipitate of reduced salts; and
(iii) drying the precipitate obtained in step (ii).

9. A method according to Claim 8, wherein the pH of the mixed solution in step (ii) is adjusted to 7-8.

## Patentansprüche

1. Nicht-platinbasierter Elektrodenkatalysator für Brennstoffzellen, umfassend eine Ruthenium(Ru)-Rhodium(Rh)-Binärlegierung, wobei Ruthenium und Rhodium in der Ruthenium-Rhodium-Binärlegierung beide in einem Gehalt von jeweils 10-90 mol% vorliegen.

2. Nicht-platinbasierter Elektrodenkatalysator gemäß Anspruch 1, der durch einen aus porösem Kohlenstoff, leitfähigen Polymeren und Metalloxiden ausgewählten Träger gestützt wird.

3. Nicht-platinbasierter Elektrodenkatalysator gemäß Anspruch 1, der ein Kathodenkatalysator ist.

4. Nicht-platinbasierte Elektrode, die den gemäß einem der vorhergehenden Ansprüche definierten Katalysator umfasst.

5. Membranelektrodenanordnung (MEA) für eine Brennstoffzelle, umfassend:
(a) eine erste Elektrode, die eine erste Katalysatorschicht aufweist;
(b) eine zweite Elektrode, die eine zweite Katalysatorschicht aufweist; und
(c) eine Elektrolytmembran, zwischengeschoben zwischen der ersten Elektrode und der zweiten Elektrode; wobei eine oder beide der ersten Katalysatorschicht und der zweiten Katalysatorschicht den gemäß einem der Ansprüche 1-3 definierten nicht-platinbasierten Katalysator umfasst/umfassen.

6. Brennstoffzelle, die die gemäß Anspruch 5 definierte Membranelektrodenanordnung umfasst.

7. Brennstoffzelle gemäß Anspruch 6, die eine Polymerelektrolytbrennstoffzelle, eine Direkt-Flüssigkeitsbrennstoffzelle, eine Direkt-Methanol-Brennstoffzelle, eine Direkt-Ameisensäure-Brennstoffzelle, eine Direkt-Ethanol-Brennstoffzelle oder eine Direkt-Dimethylether-Brennstoffzelle ist.

8. Verfahren zum Herstellen des gemäß Anspruch 1 definierten nicht-platinbasierten Elektrodenkatalysators, das die Schritte umfasst:
(i) separates Lösen eines Rutheniumsalzes und eines Rhodiumsalzes, so dass eine Rutheniumsalzlösung und eine Rodiumsalzlösung bereitgestellt werden;
(ii) Vermischen der im Schritt (i) erhaltenen Lösungen unter Rühren, so dass eine vermischte Lösung bereitgestellt wird, und Zugeben eines Reduktionsmittels dazu, so dass ein Niederschlag reduzierter Salze erhalten wird; und
(iii) Trocknen des im Schritt (ii) erhaltenen Niederschlags.

9. Verfahren gemäß Anspruch 8, wobei der pH-Wert der vermischten Lösung im Schritt (ii) auf 7 bis 8 eingestellt wird.

## Revendications

1. Catalyseur d'électrode sans platine pour piles à combustible qui comprend un alliage binaire ruthénium (Ru)-rhodium (Rh), dans lequel le ruthénium et le rhodium sont chacun présents dans l'alliage binaire ruthénium-rhodium dans une quantité de 10-90 mole %.

2. Catalyseur d'électrode sans platine selon la revendication 1, qui est supporté par au moins un support choisi parmi le carbone poreux, les polymères conducteurs et les oxydes métalliques.

3. Catalyseur d'électrode sans platine selon la revendication 1, qui est un catalyseur de cathode.

4. Électrode sans platine comprenant le catalyseur tel que défini dans l'une quelconque des revendications précédentes.

5. Assemblage membrane-électrode (AME) pour une pile à combustible qui comprend :
(a) une première électrode ayant une première couche de catalyseur;
(b) une deuxième électrode ayant une seconde couche de catalyseur; et
(c) une membrane d'électrolyte interposée entre la première couche de catalyseur et la deuxième couche de catalyseur;
dans lequel soit l'une soit les deux de la première couche de catalyseur et de la seconde couche de catalyseur comprennent la catalyseur sans platine tel que défini dans l'une quelconque des revendications 1-3.

6. Pile à combustible comprenant l'assemblage membrane-électrode tel que défini dans la revendication 5.

7. Pile à combustible selon la revendication 6, qui est une pile à combustible à électrolyte polymère, une pile à combustible à liquide direct, une pile à combustible à méthanol direct, une pile à combustible à acide formique direct, une pile à combustible à éthanol direct ou une pile à combustible à diméthyléther direct.

8. Méthode de préparation du catalyseur d'électrode sans platine tel que défini dans la revendication 1, qui comprend les étapes de :
(i) la dissolution d'un sel de ruthénium et d'un sel de rhodium séparément pour fournir une solution de sel de ruthénium et une solution de sel de rhodium ;
(ii) le mélange des solutions obtenues dans l'étape (i) avec agitation pour fournir une solution mélangée et l'addition d'un agent réducteur à celle-ci pour obtenir un précipité de sels réduits ; et
(iii) le séchage du précipité obtenu dans l'étape (ii).

9. Méthode selon la revendication 8, dans laquelle le pH de la solution mélangée dans l'étape (ii) est ajusté à 7-8.
